Europäisches Patentamt

European Patent Office

Office européen des brevets

(19)

(11) Numéro de publication: **0 1 1 2 786**
A1

## (12) DEMANDE DE BREVET EUROPEEN

(21) Numéro de dépôt: 83420179.0

(22) Date de dépôt: 24.11.83

(51) Int. Cl.³: **A 21 B 1/44**, A 21 B 1/50,
F 27 D 3/00

(30) Priorité: 26.11.82 FR 8220343

(43) Date de publication de la demande: 04.07.84
Bulletin 84/27

(84) Etats contractants désignés: **AT BE CH DE GB IT LI LU NL SE**

(71) Demandeur: **Pavailler, Société Anonyme:, Zone Industrielle B.P. 102, F-26501 Bourg les Valence (FR)**

(72) Inventeur: **Sauzeat, René, 21, allée des Jardins du Rhône, F-26500 Bourg les Valence (FR)**
Inventeur: **Gomez-Ortiz, Jacky, 97, Chemin de Valentin, F-26500 Bourg les Valence (FR)**

(74) Mandataire: **Ropital-Bonvarlet, Claude et ai, Cabinet BEAU DE LOMENIE 99, Grande rue de la Guillotière, F-69007 Lyon (FR)**

(54) **Dispositif de suspension, d'élévation et d'entraînement en rotation d'un chariot à l'intérieur d'une enceinte.**

(57) Enceinte de traitement thermique.
Le dispositif comprend:
- un arbre (7) coulissant verticalement,
- un disque (10) porté par l'arbre (7),
- un transformateur de mouvement (8) interposé entre l'arbre (7) et un demi-arbre (24) couplé à un organe moteur (9).

Application aux fours de boulangerie du type à chariot tournant.

EP 0 112 786 A1

"Dispositif de suspension, d'élévation et d'entraînement en rotation d'un chariot à l'intérieur d'une enceinte"

La présente invention concerne le domaine technique général de l'application de calories ou de frigories à des produits entreposés momentanément dans une enceinte fermée.

Pour des raisons de régularité de chauffage, de refroidissement ou de contrôle de température devant s'appliquer à des produits, il est connu de les disposer sur ou dans un chariot ou panier qui est placé dans une enceinte fermée dans laquelle un tel chariot est soumis à une rotation régulière pendant une durée déterminée. Ceci est notamment le cas des produits alimentaires devant être cuits, congelés ou contrôlés en température.

L'objet de l'invention trouve une application particulière dans le domaine de la boulangerie et, plus spécialement encore, dans celui des fours de cuisson du type à chariot rotatif.

Pour atteindre le but ci-dessus, plusieurs solutions ont été proposées.

L'une des premières a été de placer, sur le plancher de l'enceinte, une plateforme susceptible d'être commandée en rotation. L'adaptation d'un chariot, roulant ou non, sur une telle plateforme implique l'existence d'une rampe ou d'un plan incliné capable de compenser la différence de hauteur entre le plancher de l'enceinte et la plateforme.

De tels dispositifs permettent, effectivement, d'entraîner en rotation constante un chariot roulant ou non, mais présentent plusieurs inconvénients.

Le premier est celui de l'encombrement au sol et de la différence de niveau entre le plancher de l'enceinte et la plateforme.

Le second tient au fait que le mécanisme d'entraînement en rotation de la plateforme est logé dans une cavité dans laquelle s'accumulent les poussières et autres salissures qui exigent une intervention fréquente d'entretien.

Une seconde solution technique a été de faire comporter à l'enceinte un arbre tournant traversant le plafond et portant une cage d'écureuil centrée sur un pivot de rotation présenté par le plancher.

Un tel système permet de supprimer les inconvénients de deuxième ordre du dispositif précédent mais implique toujours une rampe de compensation de niveau permettant la mise en place et l'extraction d'un chariot dans la cage d'écureuil.

Une troisième solution technique a été de faire comporter à l'arbre des moyens destinés à coopérer avec des moyens complémentaires portés par le chariot. La coopération de ces moyens au moment de l'engagement du chariot permet d'assurer la suspension de ce dernier, ainsi que son élévation par rapport au plancher. De cette manière, la suspension et la rotation peuvent intervenir avec suppression des inconvénients des deux ordres de la première solution technique rappelée ci-dessus.

Si ces dispositifs sont satisfaisants, en revanche, ils possèdent un inconvénient d'ordre pratique.

En effet, la coopération entre les moyens portés par l'arbre d'entraînement en rotation et ceux, complémentaires, portés par le chariot, impose de soumettre ce dernier à un certain basculement relatif, de manière à amorcer la coopération des moyens complémentaires. Ce basculement exige une dextérité du personnel affecté à cette tâche et lui impose une dépense physique qui est loin d'être négligeable lorsque le chariot supporte un nombre et/ou une masse relativement importante de produits à cuire, congeler ou contrôler en température.

L'objet de l'invention est de remédier aux inconvénients ci-dessus en proposant un nouveau dispositif permettant de réaliser la suspension, l'élévation, l'abaissement et l'entraînement en rotation d'un chariot à l'intérieur d'une enceinte, sans soumettre le personnel, affecté à cette tâche, à une dépense physique pour provoquer un basculement du chariot et de la masse de produits qu'il supporte, en vue de permettre, soit l'engagement en coopération relative des moyens complémentaires entre le dispositif et le chariot, soit le dégagement relatif entre ces moyens complémentaires.

Un autre objet de l'invention est de proposer un nouveau dispositif qui permette d'obtenir, automatiquement, l'élévation, la rotation et l'abaissement d'un chariot chargé, sans intervention du personnel, à la fois en début et en fin de cycle de traitement thermique en ne mettant en oeuvre qu'un seul organe moteur.

Un objet supplémentaire de l'invention est de proposer un dispositif de conception simple et particulièrement robuste ne nécessitant pas d'entretien fréquent délicat, ni de personnel hautement qualifié pour son contrôle ou le réglage de son fonctionnement.

Un autre objet de l'invention est de proposer un dispositif qui permette, en toutes circonstances, un dégagement ou une désolidarisation du chariot, quel que soit l'état de fonctionnement ou de disfonctionnement du dispositif.

Pour atteindre les buts ci-dessus, le dispositif de suspension, d'élévation et d'entraînement en rotation conforme à l'invention est caractérisé en ce qu'il comprend :

- un arbre coulissant verticalement à travers le plafond,

- un disque porté par l'extrémité de l'arbre interne à l'enceinte et destiné à être engagé entre deux glissières portées par le dessus d'un chariot,

- un transformateur de mouvement interposé entre la partie supérieure de l'arbre et un demi-arbre d'entraînement immobilisé en translation axiale, couplé à un organe moteur d'entraînement à double sens de rotation et comportant une partie filetée sur une longueur au moins égale à la course d'élévation du chariot, ledit transformateur comprenant :

. un moyeu taraudé, solidaire en rotation de l'arbre et coopérant avec la partie filetée du demi-arbre,

. des moyens coopérant avec le moyeu pour, d'une part, immobiliser ce dernier contre une rotation résultant du vissage de la vis et libérer ledit moyeu après vissage complet de ladite vis et, d'autre part, immobiliser le moyeu contre une rotation résultant du dévissage de la vis.

Diverses autres caractéristiques ressortent de la description faite ci-dessous en référence aux dessins annexés qui montrent, à titre d'exemples non limitatifs, des formes de réalisation de l'objet de l'invention.

La fig. 1 est une vue schématique montrant en coupe l'objet de l'invention dans son application à un four de cuisson pour produits panifiables.

La fig. 2 est une vue en plan, partie en coupe, prise sensiblement à plus grande échelle selon la ligne II-II de la fig. 1.

La fig. 3 est une coupe-élévation montrant plus en détail le dispositif de l'invention.

La fig. 4 est une vue en plan prise sensiblement selon la ligne IV-IV de la fig. 3.

La fig. 5 est une élévation schématique, analogue à la fig. 1, mais illustrant le dispositif dans une autre position caractéristique de fonctionnement.

La fig. 6 est une vue schématique représentant une variante de réalisation de l'un des éléments constitutifs de l'objet de l'invention.

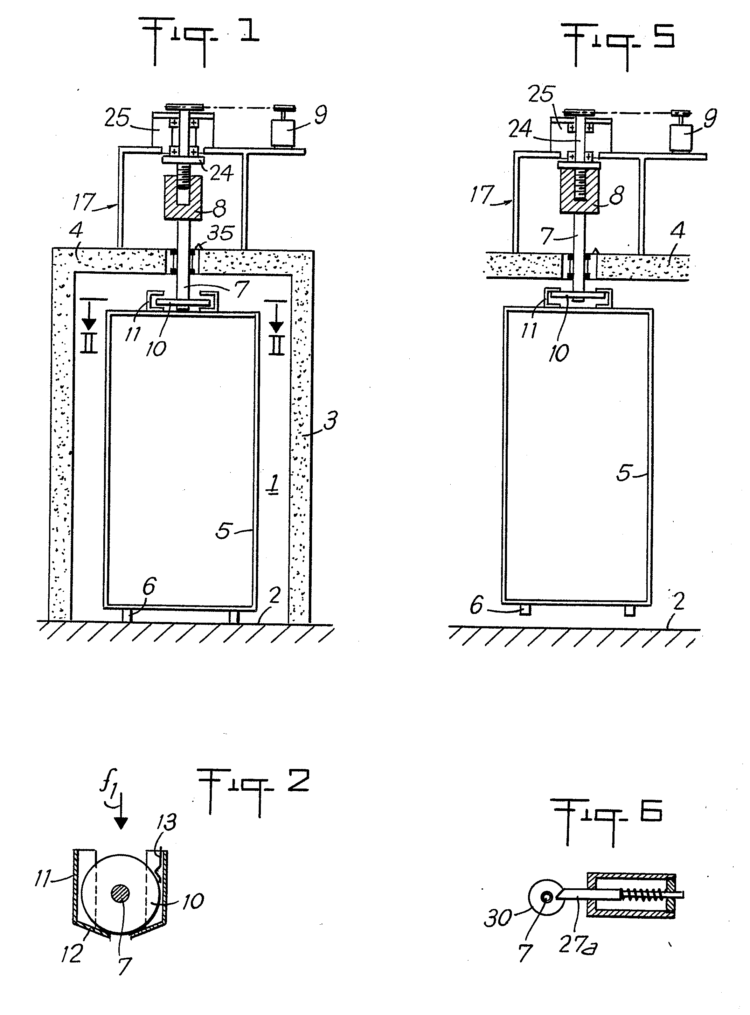

La fig. 1 montre, de façon schématique, une enceinte 1 de cuisson, de congélation ou de contrôle de température, délimitée par un plancher 2, des parois verticales 3 et un plafond 4. De façon habituelle, ces éléments de construction sont réalisés de manière à assurer le plus faible coefficient d'échange thermique entre le volume utile de l'enceinte 1 et le milieu environnant.

Bien que cela ne soit pas représenté, les ouvertures sont prévues dans deux au moins des parois verticales 3, de manière à placer l'enceinte 1 en relation avec une unité, non illustrée au dessin, de chauffage, de refroidissement-congélation ou de contrôle de température.

Ces éléments constitutifs de l'enceinte 1 ne sont pas représentés au dessin, car ils ne font pas partie directement de l'invention et sont, de toute façon, connus de l'homme de l'art concerné.

L'une des parois verticales 3 comporte, également, une porte permettant d'entrer ou d'extraire de l'enceinte 1 un chariot 5, de préférence, équipé d'organes de roulement 6 et destiné à supporter, de toute façon convenable, des produits à cuire, à congeler ou à contrôler en température pendant une durée déterminée.

Le chariot 5 doit être maintenu dans l'enceinte 1 de manière à pouvoir être suspendu et entraîné en rotation sans entrave, de façon que les produits qu'il supporte soient soumis à une application régulière des calories ou frigories véhiculées à l'intérieur de l'enceinte 1.

Pour atteindre l'objectif ci-dessus, le dispositif selon l'invention comprend un arbre 7 de suspension, d'abaissement, d'élévation et d'entraînement en rotation, monté de façon à coulisser verticalement à travers le plafond 4 de l'enceinte 1. L'arbre 7 est relié, par un transformateur de mouvement 8, à un organe moteur d'entraînement en rotation 9, tel qu'un moteur électrique.

L'arbre 7 comporte, au niveau de sa partie terminale inférieure s'étendant à l'intérieur de l'enceinte 1, un disque 10 destiné à coopérer avec des glissières 11 portées par le dessus du chariot 5. Les glissières 11 sont au nombre de deux, parallèles entre elles et occupent une position telle, en écartement relatif et en niveau horizontal, qu'elles permettent un engagement libre du disque 10 entre elles lorsque le chariot 5 est déplacé en appui sur le plancher 2.

Les glissières 11 sont, de préférence, réalisées en forme de profilés, du type à section droite transversale en "U", de manière que les deux ailes parallèles représentent des butées axiales limitant le débattement ou déplacement axial relatif du disque 10. Il est évident qu'une réalisation différente pourrait également être retenue.

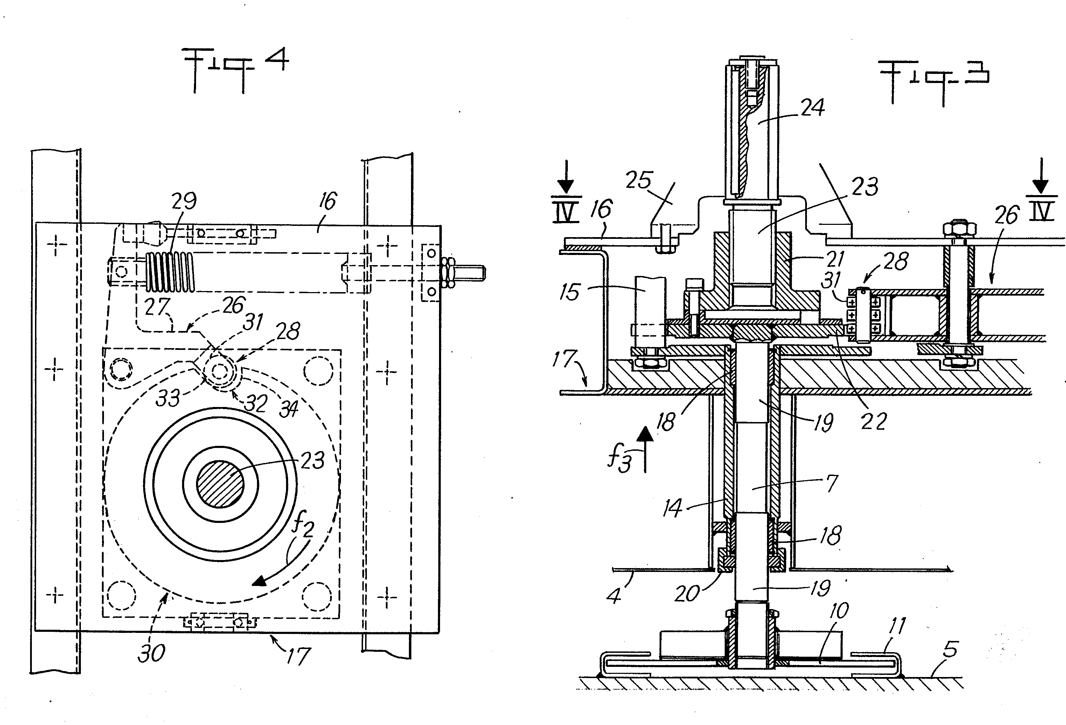

La fig. 2 montre que les glissières 11 sont réalisées pour comporter, chacune, une butée 12 limitant l'engagement relatif du disque 10 dans le sens de la flèche $f_1$, de manière à définir une position d'engagement dans laquelle le centre de gravité du chariot 5 coïncide avec l'axe de l'arbre 7.

L'une des glissières 11 peut comporter, éventuellement, un verrou élastique 13 s'opposant à tout dégagement intempestif du disque 10.

L'arbre 7 est monté pour coulisser verticalement à travers le plafond 4. A cet effet, comme cela apparait plus clairement à la fig. 3, l'arbre 7 est guidé en coulissement axial et en rotation par une fourrure 14 suspendue par des tirants 15 à un plateau 16 faisant partie d'un châssis 17 adapté sur le plafond 4. La fourrure 14 est, par exemple, munie de deux bagues 18 formant paliers lisses coopérant avec des portées cylindriques 19 présentées par l'arbre 7. La partie terminale de la fourrure 14, dirigée vers l'intérieur de l'enceinte $\int$, est équipée d'une garniture 20 d'étanchéité et d'isolation thermique entourant la portée 19 correspondante de l'arbre 7.

La partie terminale supérieure de l'arbre 7 est associée à un écrou 21 présentant un taraudage à droite ou à gauche. L'écrou 21 peut être solidaire de l'arbre 7 ou, au contraire, être constitué par un moyeu fixé, de toute façon amovible convenable, sur un plateau 22 présenté par l'arbre 7.

L'écrou 21 coopère, en permanence, avec une partie 23 filetée à droite ou à gauche et présentée par un demi-arbre 24 qui est immobilisé axialement, mais libre de tourner dans un palier 25, du type à roulements, s'élevant à partir de la platine 16 du châssis 17. Comme cela est illustré schématiquement à la fig. 1, le demi-arbre 24 est relié à l'organe moteur d'entraînement en rotation 9 par une liaison qui peut être directe ou indirecte, en étant constituée par une chaîne, une courroie, un engrènement de pignons dentés, introduisant, éventuellement, un rapport de réduction.

La partie filetée 23 du demi-arbre 24 présente, en plus de la partie en coopération minimale permanente avec le moyeu 21, une longueur axiale utile au moins égale à la course d'élévation devant être imposée au chariot 5 pour le libérer de tout appui sur le plancher 2.

La partie terminale filetée 23 et l'écrou 21 forment un transformateur de mouvement en association avec des moyens d'immobilisation et de libération 26 coopérant avec l'écrou ou moyeu 21. Les moyens 26 comprennent une pièce mobile 27 comportant une tête 28 qui est sollicitée en permanence, par l'intermédiaire d'un organe élastique 29, pour coopérer avec une piste 30 présentée par le moyeu 21 pour se développer en permanence devant la tête 28.

Dans l'exemple illustré par les fig. 3 et 4, la pièce mobile 27 est formée par un cliquet pivotant à deux branches, porté par le châssis 17 et dont la tête 28 est constituée par une pluralité de roulements 31 superposés sur une hauteur égale à la course de déplacement axial du moyeu 21 correspondant à celle d'élévation-abaissement du chariot 5. Une disposition inverse pourrait être retenue en formant une piste 30 de hauteur suffisante pour coopérer en permanence avec un galet 31.

La piste 30 est formée par la périphérie du moyeu 21 ou, encore, du plateau 22. La piste 30 présente un profil circulaire régulier comportant une encoche 32 ménagée de façon à permettre une coopération avec la tête 28. L'encoche 32 est pratiquée pour comporter une rampe 33 inclinée dans le sens montant depuis le fond de l'encoche, en considération du sens de rotation imposé, par exemple selon le sens de la flèche $f_2$, au moyeu 21 en résultat du vissage de la partie filetée 23 à l'intérieur de ce dernier. L'encoche 32 est complétée par un côté ou une face 34 abrupte par rapport au sens de la flèche $f_2$, de manière à représenter une butée pour la tête 28. Ces orientations sont inversées lorsque le filetage de la partie 23 et le taraudage du moyeu 21 produisent une rotation dans le sens inverse à celui de la flèche $f_2$.

L'organe élastique 29 est constitué par un ressort réglable capable d'imposer à la tête 28 coopérant avec la rampe 33 un effort de freinage par frottement qui est juste supérieur au couple de rotation appliqué au moyeu 21 dans le sens de la flèche $f_2$, lors du vissage de la partie filetée 23 du demi-arbre 24 d'entraînement en rotation.

Le dispositif décrit ci-dessus fonctionne de la façon suivante.

Dans la position illustrée par les fig. 1 et 3, l'arbre 7 occupe une position de coulissement axial maximal vers le bas. Dans cette position, le disque 10 peut être engagé par déplacement relatif entre les glissières 11 d'un chariot 5 déplacé par les organes de roulement 6 sur le plancher 2 de l'enceinte 1. Dans cet état, selon la fig. 4, la tête 28 de la pièce mobile 27 est engagée dans l'encoche 32.

Le personnel chargé de contrôler le fonctionnement de l'enceinte agit de façon habituelle, après fermeture de la porte, sur le tableau de commande permettant de contrôler l'alimentation de l'organe d'entraînement en rotation 9. Ceci a pour effet d'entraîner la rotation du demi-arbre 24 dans le sens correspondant au vissage de la partie filetée 23 à l'intérieur du moyeu 21. Ce vissage a pour effet de solliciter le moyeu 21 en rotation dans le sens de la flèche $f_2$, mais cette rotation est empêchée par l'effet de freinage exercé par la tête 28 de la pièce mobile 27 maintenue en engagement dans l'encoche 32 par l'action permanente de l'organe élastique 29. Ainsi, le moyeu 21 est immobilisé en rotation, de sorte que le vissage de la partie filetée 23 se traduit par une élévation progressive du moyeu 21 en déplacement axial sur la partie filetée 23. Le moyeu 21 entraîne, dans son déplacement axial selon la flèche $f_3$, l'arbre 7 qui, par le disque 10, soulève le chariot 5.

Ce mouvement d'élévation se produit jusqu'au moment où le moyeu 21 est amené en butée contre le demi-arbre 24. La rotation continue du demi-arbre 24 impose, alors, au moyeu 21 un couple de rotation dans le sens de la flèche $f_2$ supérieur à l'effort de freinage exercé par la pièce mobile 27. La tête 28 est ainsi entraînée en effacement sous l'effet de la rampe inclinée 33 et libère le moyeu 21 qui, entraîné en rotation, transmet son mouvement à l'arbre 7 chargé de faire tourner le chariot 5.

Pendant la rotation du moyeu 21, la tête 28 reste en coopération avec la piste 30. Pour chaque tour de rotation, la tête 28 est amenée à s'engager de nouveau dans l'encoche 32, de laquelle elle est automatiquement escamotée par l'action de la rampe 33.

La fonction primaire du transformateur de mouvement peut intervenir automatiquement, étant donné que la tête 28 ou la piste 30 présente une hauteur utile correspondant à la hauteur d'élévation du chariot 5.

En fin de programmation du cycle d'entraînement en rotation du chariot 5, l'alimentation de l'organe moteur 9 est inversée pour produire l'entraînement en rotation du demi-arbre 24 dans le sens inverse à celui de la flèche $f_2$.

Cette rotation inversée a pour effet d'amener l'encoche 32 en regard de la tête 28 qui s'y engage automatiquement par l'action du ressort 29. Le bord abrupt 34 vient ainsi en appui contre la tête 28 qui s'oppose alors à toute rotation du moyeu 21 dans le sens correspondant.

La rotation inverse du demi-arbre 24 produit alors le dévissage de la partie terminale filetée 23 par rapport au moyeu 21 immobilisé en rotation. De la sorte, le moyeu 21 est sollicité en déplacement axial vers le bas dans le sens inverse à celui de la flèche $f_3$ et commande le déplacement correspondant de l'arbre coulissant 7.

Le disque 10 ramène ainsi le chariot 5 en appui par les organes de roulement 6 sur le plancher 2, dans une position stable à partir de laquelle le personnel peut assurer une extraction aisée du chariot 5 par rapport à l'enceinte 1.

Il y a lieu de noter que le transformateur de mouvement agit dans ce sens de façon automatique, à partir du moment où l'alimentation de l'organe moteur 9 est inversée. Cette alimentation est maintenue jusqu'au moment où le moyeu 21 ou, par exemple, le plateau 22 commande en fin de course de descente un contacteur 35 (fig. 1)

10

d'arrêt d'alimentation de l'organe moteur 9.

Il y a lieu de noter, par ailleurs, que le chariot 5 est, dans tous les cas, ramené en appui sur le plancher 2 dans une position d'immobilisation identique à celle d'introduction, étant donné que l'encoche unique 32 représente un moyen d'indexation en coopération avec la tête 28.

Les moyens selon l'invention permettent d'extraire le chariot 5 ramené en appui sur le plancher 2, quelque soit l'état de fonctionnement du dispositif et même si, pour une raison quelconque, le demi-arbre 24 est entraîné en rotation continue. En effet, dans un tel cas, le moyeu 21 est amené en butée de déplacement axial, de sorte que la rotation du demi-arbre 24 lui impose, dans le même sens, un mouvement de rotation qui est transmis à l'arbre 7 faisant tourner le disque 10. Cette rotation n'a aucune incidence sur la possibilité de dégagement du chariot 5, étant donné que le disque 10 peut être déplacé relativement, même en rotation continue, à l'intérieur des glissières 11 parallèles entre elles.

L'objet de l'invention permet ainsi, à partir d'éléments constitutifs particulièrement robustes, d'obtenir automatiquement, de façon certaine, la suspension, l'élévation, l'abaissement et l'entraînement en rotation d'un chariot 5 sans exiger du personnel une manipulation délicate de centrage, ainsi qu'une dépense physique visant à amener, par basculement du chariot 5, les glissières 11 en partie au moins en coïncidence avec le disque 10.

La fig. 6 montre une variante de réalisation selon laquelle la pièce mobile 27 est constituée par un taquet ou un doigt 27a asservi à l'action d'un ressort et disposé radialement au moyeu 21 pour coopérer avec la piste 30 et l'encoche 32.

L'invention trouve une application préférée dans le domaine des fours de boulangerie mais peut, également, être mise en oeuvre dans les enceintes d'étuvage, de contrôle de température ou de congélation de produits alimentaires.

L'invention n'est pas limitée aux exemples décrits et représentés, car diverses modifications peuvent y être apportées sans sortir de son cadre.

REVENDICATIONS :

1 - Dispositif de suspension, d'élévation et d'entraînement en rotation d'un chariot (5) à l'intérieur d'une enceinte (1), du type comprenant un arbre (7) traversant le plafond (4) de l'enceinte et comportant, à l'extérieur de cette dernière, des moyens (9) d'entraînement en rotation et, à l'intérieur des moyens de suspension et d'élévation destinés à coopérer avec des moyens complémentaires portés par le dessus du chariot, caractérisé en ce qu'il comprend :

- un arbre (7) coulissant verticalement à travers le plafond,
- un disque (10) porté par l'extrémité de l'arbre interne à l'enceinte et destiné à être engagé entre deux glissières (11) portées par le dessus d'un chariot,
- un transformateur de mouvement (8) interposé entre la partie supérieure de l'arbre (7) et un demi-arbre (24) d'entraînement immobilisé en translation axiale, couplé à un organe moteur d'entraînement à double sens de rotation et comportant une partie filetée (23) sur une longueur au moins égale à la course d'élévation du chariot, ledit transformateur comprenant :
  . un moyeu (21) taraudé, solidaire en rotation de l'arbre (7) et coopérant avec la partie filetée (23) du demi-arbre,
  . des moyens (26-30-32) coopérant avec le moyeu pour, d'une part, immobiliser ce dernier contre une rotation résultant du vissage de la vis et libérer ledit moyeu après vissage complet de ladite vis et, d'autre part, immobiliser le moyeu contre une rotation résultant du dévissage de la vis.

2 - Dispositif selon la revendication 1, caractérisé en

ce que les moyens coopérant avec le moyeu comprennent :

- une pièce mobile (26) sollicitée par un ressort (29) en direction du moyeu (21),

- une piste (30) ménagée sur le moyeu (21) pour se développer en permanence devant la pièce mobile et délimitant une encoche (32) comprenant une rampe (33) inclinée de façon montante depuis le fond de l'encoche par rapport au sens de rotation du moyeu sous l'effet de vissage de la vis et un bord (34) abrupt en considération du sens de rotation du moyeu sous l'effet de dévissage de la vis.

3 - Dispositif selon la revendication 2, caractérisé en ce que la pièce mobile (26) est conformée pour présenter une tête (28) coopérant avec la piste sur une hauteur au moins égale à la course verticale d'élévation de l'arbre.

4 - Dispositif selon la revendication 1, 2 ou 3, caractérisé en ce que la pièce mobile (26) est constituée par un cliquet pivotant.

5 - Dispositif selon la revendication 1, 2 ou 3, caractérisé en ce que la pièce mobile (26) est constituée par un doigt (27a) ou taquet coulissant radialement par rapport à l'axe du moyeu.

6 - Dispositif selon la revendication 1, caractérisé en ce que le moyeu (21) coopère avec un contacteur (35) interrompant l'alimentation des moyens (9) d'entraînement en rotation du demi-arbre (24) en fin de course d'abaissement de l'arbre (7).

7 - Dispositif selon la revendication 1, caractérisé en ce que le demi-arbre (24) d'entraînement est suspendu à un châssis (17) rapporté sur le plafond (4) de l'enceinte et en ce que l'arbre coulissant (7), coopérant en permanence avec le demi-arbre, est guidé coaxialement à ce dernier dans une fourrure (14) de coulissement et de rotation traversant le plafond.

8 - Dispositif selon la revendication 7, caractérisé en ce que l'extrémité basse de la fourrure (14) est associée à une garniture (20) d'étanchéité et d'isolation thermique entourant la partie terminale inférieure de l'arbre coulissant.

9 - Dispositif selon la revendication 1, caractérisé en ce que les glissières (11) du chariot comportent une butée (12) d'engagement du disque, de telle manière que le centre de gravité d'un chariot coïncide avec l'axe vertical de l'arbre coulissant (7).

0112786

1/2

Fig. 1

Fig. 5

Fig. 2

Fig. 6

Fig.3

Fig.4

| Office européen des brevets | **RAPPORT DE RECHERCHE EUROPEENNE** | Numéro de la demande |

EP 83 42 0179

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-3 537 405 (VERHOEVEN) <br> * Revendications 11-13; figures 3,8-10 * | 1 | A 21 B 1/44 <br> A 21 B 1/50 <br> F 27 D 3/00 |
| A | DE-A-1 937 472 (ELMEKO) <br> * Pages 4-7; figures 1,5-8 * | 1 | |
| A | DE-A-2 519 849 (TIPEREVENT) | 1 | |
| A | DE-A-1 800 800 (DAHLEN) | 1 | |

DOMAINES TECHNIQUES RECHERCHES (Int. Cl. 3)

A 21 B
F 27 B

Le présent rapport de recherche a été établi pour toutes les revendications

| Lieu de la recherche <br> LA HAYE | Date d'achèvement de la recherche <br> 06-03-1984 | Examinateur <br> VROMMAN L.E.S. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant